# EUROPÄISCHE PATENTSCHRIFT

(11) **EP 2 190 700 B1**
(45) Veröffentlichungstag und Bekanntmachung des Hinweises auf die Patenterteilung: **19.10.2011**
(21) Anmeldenummer: 08787048.1
(22) Anmeldetag: 08.08.2008
(51) Int. Cl.: B60R 25/00, G07C 9/00

(54) **MOBILER IDENTIFIKATIONSGEBER**
MOBILE IDENTIFICATION GENERATOR
ÉMETTEUR D'IDENTIFICATION MOBILE

(30) Priorität: 24.08.2007 DE 102007040295
(43) Veröffentlichungstag der Anmeldung: 02.06.2010
(73) Patentinhaber: Huf Hülsbeck & Fürst GmbH & Co. KG, 42551 Velbert (DE)
(72) Erfinder: MÜLLER, Ulrich, 42549 Velbert (DE)
(74) Vertreter: Patentanwälte Bals & Vogel
(86) Internationale Anmeldenummer: PCT/EP2008/060455
(87) Internationale Veröffentlichungsnummer: WO 2009/027205

(56) Entgegenhaltungen:
- US-A1- 2005 237 150
- US-A1- 2006 145 810

## Beschreibung

Die Erfindung betrifft einen mobilen Identifikationsgeber für ein Sicherheitssystem eines Kraftfahrzeuges, mit einem Gehäuse, innerhalb dessen eine Elektronikeinheit zur Datenkommunikation mit einem fahrzeugseitigen Teil, insbesondere des Sicherheitssystems angeordnet ist, wobei mindestens ein Betätigungselement zum Auslösen eines Signals in dem mobilen Identifikationsgeber vorgesehen ist.

Mobile Identifikationsgeber, auch ID-Geber, werden bei zahlreichen Anwendungen bei Kraftfahrzeugen zur Erhöhung des Bedienerkomforts und zur Steigerung der Diebstahlsicherheit eingesetzt.

Herkömmlich werden Infrarotsysteme oder Funksysteme verwendet, bei denen der berechtigte Benutzer eine Taste an dem ID-Geber betätigt, um ein Signal zur Basisstation, beispielsweise an eine im Kraftfahrzeug vorgesehene Sende- und Empfangseinheit zum Ver- und/oder Entriegeln der Schließvorrichtung des Fahrzeugs zu übermitteln. Nach einer entsprechenden Betätigung des ID-Gebers, der auch als elektronischer Schlüssel bekannt ist, erfolgt eine Datenkommunikation zwischen dem ID-Geber und der Schließvorrichtung, bei der beispielsweise ein Code, vorzugsweise über elektromagnetische Wellen, ausgetauscht wird, so dass nach positiver Auswertung des Codes zum Beispiel die Türen, der Kofferraumdeckel des Kraftfahrzeuges fernbedienbar ent- und/oder verriegelt sowie weitere Funktionen ausgelöst werden können.

Das Dokument US 2006/0145810 offenbart ein System vom Stand der Technik gemäß dem Oberbegriff des Anspruchs 1.

Es ist Aufgabe der vorliegenden Erfindung, einen ID-Geber der eingangs erwähnten Art in einer verbesserten Ausführungsform zu schaffen, bei welcher insbesondere eine höhere Sicherheit sowie eine verbesserte Funktionalität erzielt werden kann.

Zur Lösung dieser Aufgabe wird ein mobiler Identifikationsgeber mit den Merkmalen des Anspruches 1 vorgeschlagen. Darüber hinaus wird die Aufgabe durch das Verfahren zur berührungslosen Auslösung eines Signals in einem mobilen Identifikationsgeber in erfinderischer Weise gelöst. Weitere vorteilhafte Ausführungsformen der vorliegenden Erfindung und des Verfahrens ergeben sich aus den jeweiligen Unteransprüchen. Merkmale und Details, die im Zusammenhang mit dem erfindungsgemäßen Verfahren beschrieben sind, gelten dabei selbstverständlich auch im Zusammenhang mit dem erfindungsgemäßen mobilen Identifikationsgeber und jeweils umgekehrt. Dabei können die in den Ansprüchen und in der Beschreibung erwähnten Merkmale jeweils einzeln für sich oder in beliebiger Kombination erfindungswesentlich sein.

Die grundlegende Idee des erfindungsgemäßen mobilen Identifikationsgebers beruht darauf, dass eine Bewegung des Objektes innerhalb der Betätigungszone zu einer Auslösung eines Signales führt. Das Betätigungselement überwacht optisch die Betätigungszone. Fährt ein Objekt - beispielsweise eine menschliche Hand - in die Betätigungszone hinein, löst dieses die Generierung des Signales aus. Das erfindungsgemäße Betätigungselement weist den Vorteil auf, dass es verschleißfrei und von äußeren Umwelteinflüssen unbeeinträchtigt arbeiten kann. Es bedarf keinerlei mechanischer Elemente zur optischen Überwachung der Betätigungszone.

Zusätzlich wird im Rahmen der Erfindung ein Sensor innerhalb des Betätigungselementes verwendet, der eine Ermittlung eines fremdlicht unabhängigen optischen Signals ermöglicht. Dadurch ist sichergestellt, dass äußere Einflüsse, wie Sonnenstrahlung etc. nicht zu einer Beeinträchtigung der Detektion von Bewegungen in der Betätigungszone führen. Das erfindungsgemäße Betätigungselement ermöglicht somit eine Überwachung der Betätigungszone, ohne das eine die Strahlung der Anordnung überlagernde Fremdstrahlung in einer Beeinflussung der Messung resultiert.

Eine die Erfindung verbessernde Maßnahme sieht vor, dass mittels des Betätigungselements eine schlüssellosen Aktivierung eines Ver- und Entriegelungsvorganges einer Schließvorrichtung auslösbar ist, insbesondere dass die schlüssellose Aktivierung berührungslos innerhalb der Betätigungszone auslösbar ist.

In einer vorteilhaften Ausgestaltung ist vorgesehen, dass das Betätigungselement als ein Taster, ein Schieberegler, ein Annäherungsdetektor, ein Bewegungsdetektor und/oder ein 3-dimensionale Bewegungen erfassender Detektor dient. Je nach Ausgestaltung des Betätigungselementes ist es möglich, unterschiedliche Bewegungen des Objektes zu registrieren. Je nach Ausgestaltung des mobilen Identifikationsgebers, können mittels des Betätigungselementes unterschiedliche Funktionen ausgelöst werden. So ist es denkbar, mittels des Betätigungselementes einfache Schaltfunktionen wie bei einem Taster auszulösen oder aber auch eine dreidimensionale Bewegung des Objektes zu erfassen. Dadurch kann das Betätigungselement als ein Ersatz für ein Keyboard dienen. Mittels eines solcher Art ausgestalteten Betätigungselementes kann der mobile Identifikationsgeber auch als eine Art PDA (Personal Digital Assistant) eingesetzt werden.

Eine weitere vorteilhafte Ausführungsvariante zeichnet sich dadurch aus, dass das Betätigungselement die Betätigungszone optisch derart überwacht, dass eine Erfassung eines vorgegebenen Bewegungsmusters durch eine Bewegung des Objektes zur Auslösung des Signals führt. Eine weitere vorteilhafte Ausführungsvariante zeichnet sich dadurch aus, dass das vorgegebene Bewegungsmuster eine zumindest zweidimensionale Bewegung des Objektes in der Betätigungszone ist. Eine die Erfindung verbessernde Maßnahme sieht vor, dass mittels des Betätigungselements eine schlüssellosen Aktivierung eines Ver- und Entriegelungsvorganges einer Schließvorrichtung auslösbar ist, insbesondere dass die schlüssellose Aktivierung berührungslos innerhalb der Betätigungszone auslösbar ist. Eine weitere vorteilhafte Ausführungsform der Erfindung zeichnet sich dadurch aus, dass das Signal das Öffnen und/oder Schließen des beweglichen Teils auslöst, insbesondere dass Signal das Öffnen und/oder Schließen einer Tür, einer Heckklappe oder dergleichen eines Kraftfahrzeugs auslöst. Im Rahmen der Erfindung wird gefordert, dass ein Objekt eine Bewegung innerhalb der Betätigungszone ausführen muss, die mit einem vorgegebenen Bewegungsmuster übereinstimmen muss, um eine der genannten Funktionen auszulösen. Es bedarf somit nicht einer beliebigen Bewegung innerhalb der Betätigungszone, sondern einer Bewegung, die einem vordefinierten Bewegungsmuster entspricht. Dadurch ist zum einen sichergestellt, dass zufällige Bewegungen innerhalb der Betätigungszone nicht zu einer Funktionsauslösung führen. Andererseits können eine Anzahl von Bewegungsmustern vordefiniert werden, welche jeweils unterschiedliche Funktionen auslösen. So kann beispielsweise eine Bewegung in eine erste Richtung zu einem Entriegelt oder Öffnen einer Tür oder eines Schlosses führen. Eine entgegengesetzte Bewegung in eine zweite Richtung kann hingegen eine Verriegeln oder Schließen des Schlosses oder Tür nach sich ziehen. Dadurch dass die Bewegung innerhalb der Betätigungszone optisch abgetastet und mit einem Bewegungsmuster verglichen wird, ist es nicht mehr nötig, den mobilen Identifikationsgeber zu berühren. Dieses ist insbesondere dann vorteilhaft, wenn der mobile Identifikationsgeber verschmutzt ist und ein potenzieller Benutzer diese nicht berühren möchte.

Eine die Erfindung verbessernde Maßnahme sieht vor, dass die Betätigungszone eine optisch überwachte dreidimensionale Zone ist, insbesondere dass das Betätigungselement einen Sensor aufweist, besonders bevorzugt dass der Sensor optoelektronisch ausgestaltet ist, insbesondere dass der Sensor mindestens einen Lichtsender und wenigstens einen Lichtempfänger aufweist, wobei mittels des Sensors eine Richtung einer Bewegung des Objektes in der Betätigungszone bestimmbar ist. Die von dem Betätigungselement aufgespannte Betätigungszone ist vorteilhafterweise dreidimensional ausgestaltet. Zur optischen Überwachung dieser Zone dient ein Sensor der optoelektronische Bauteile aufweist, um die Bewegung des Objektes in der Betätigungszone zu registrieren.

In einer vorteilhaften Ausgestaltung ist vorgesehen, dass das Objekt eine menschliche Hand, ein menschlicher Finger oder ein mechanisches Bauteil ist.

Eine die Erfindung verbessernde Maßnahme sieht vor, dass das Betätigungselement in dem Gehäuse angeordnet ist.

In einer vorteilhaften Ausgestaltung ist vorgesehen, dass ein Abdeckelement das Betätigungselement überdeckt, besonders bevorzugt dass das Abdeckelement stoffschlüssig mit dem Gehäuse verbunden ist. Die stoffschlüssige Verbindung des Abdeckelementes mit dem Gehäuse kann durch bekannte Klebeverfahren oder Schweißverfahren sichergestellt werden. Darüber hinaus kann das Abdeckelement als lasertransparent und das Gehäuse als laserabsorbierend ausgestaltet sein, um ein Laserverschweißen des Abdeckelementes mit dem Gehäuse zu ermöglichen. Durch die stoffschlüssige Verbindung des Abdeckelementes mit dem Gehäuse ist sichergestellt, dass keine Umwelteinflüsse in das Innere des mobilen ID-Gebers eindringen können.

Eine weitere verbessernde Maßnahme sieht vor, dass das Abdeckelement lichtdurchlässig ist, insbesondere dass Abdeckelement lichtdurchlässig für die von dem Lichtsender emittierte Wellenlänge ist, besonders bevorzugt dass die Betätigungszone oberhalb einer dem Objekt zugewandten Außenseite des Abdeckelementes angeordnet ist. In dieser Ausführungsvariante ist das Abdeckelement lichtdurchlässig gestaltet, um so eine Betätigungszone an einer Außenfläche des mobilen Identifikationsgebers aufzubauen. Ein Benutzer kann folglich über den mobilen Identifikationsgeber streichen oder diesen nahezu berühren, um so das Signal auszulösen. Dazu ist das Betätigungselement im Inneren des Gehäuses angeordnet und das Abdeckelement lichtdurchlässig gestaltet. So können die Lichtsender ungehindert ein Licht ausstrahlen, welches durch das Abdeckelement tritt. Von dem Objekt reflektiertes Licht kann ebenfalls ohne Abschwächung durch das Abdeckelement hindurchtreten und wird von den Lichtempfängern registriert. Dadurch ist es dem Betätigungselement möglich, die Bewegung des Objektes - beispielsweise der Hand - innerhalb der Betätigungszone auf der Außenseite des Gehäuses des mobilen Identifikationsgebers zu registrieren.

In einer vorteilhaften Ausgestaltung ist vorgesehen, dass das Abdeckelement lichtundurchlässig ist und das Betätigungselement eine vom Objekt abgewandte Unterseite des Abdeckelementes überwacht. Bei dieser Ausführungsvariante überwacht das Betätigungselement nicht einen Bereich auf der Außenfläche des mobilen Identifikationsgebers. Vielmehr wird ein innerer Bereich des mobilen Identifikationsgebers optisch abgetastet. Bei dem überwachten Objekt handelt es sich um das Abdeckelement, welches als Übermittlungsmittel für eine Berührung des mobilen Identifikationsgebers fungiert. Möchte ein Benutzer ein Signal auslösen, berührt er den mobilen Identifikationsgeber im Bereich des Abdeckelementes. Diese Berührung führt zu einer plastischen Deformation des Abdeckelementes. Diese Deformation führt dazu, dass das Abdeckelement eine Bewegung innerhalb der Betätigungszone des Betätigungselements ausführt. Diese Bewegung resultiert dann in einer Auslösung des Signales. In einer vorteilhaften Ausgestaltung dieser Ausführungsvariante weist die Außenseite des Abdeckelementes eine Oberflächenstruktur aufweist. Dadurch ergibt sich für einen potenziellen Benutzer ein taktiles Gefühl bei der Auslösung des Signales. Darüber hinaus kann das Abdeckelement unterschiedliche Segmente aufweisen, in denen jeweils verschiedene Signale ausgelöst werden. Wird eines dieser Segmente deformiert, registriert das Betätigungselement jeweils den Ort der Deformation und kann daraus auf das jeweils auszulösende Signal zurückschließen.

Eine die Erfindung verbessernde Maßnahme sieht vor, dass die Betätigungszone oberhalb einer dem Objekt zugewandten Außenfläche des Gehäuses angeordnet ist, insbesondere dass die Betätigungszone eine tropfenartige Form aufweist. Solche Art tropfenförmige Betätigungszonen lassen sich durch eine entsprechende Anordnung der Lichtsender und Lichtempfänger erstellen. Gleichfalls denkbar ist es, durch die Nutzung entsprechend gestalteter Blenden rechteckartig ausgestaltete Betätigungszonen zu erzielen.

In einer vorteilhaften Ausgestaltung ist vorgesehen, dass der Lichtsender eine Leuchtdiode (LEDs), eine Organische Leuchtdiode (OLEDs) oder Laserdiode ist, insbesondere dass der Lichtsender ein infrarotes Licht emittiert. Eine lichtemittierende Diode (LED) ist ein Halbleiterbauteil, das inkohärentes Licht mit einem schmalen Spektrum emittiert. Die Wellenlänge des emittierten Lichtes hängt ab von den Halbleiterbauteilen sowie möglichen Dotierungen. Die ebenfalls nutzbare organische lichtemittierende Diode (OLED) ist ein spezieller Typ einer LED, in welcher die lichtemittierende Schicht aus organischen Komponenten geformt ist.

Eine die Erfindung verbessernde Maßnahme sieht vor, dass der mobile Identifikationsgeber ein Display aufweist. Eine die Erfindung verbessernde Maßnahme sieht vor, dass auf dem Display ein Zustand des Fahrzeuges anzeigbar ist, insbesondere, dass auf dem Display kraftfahrzeugseitige Zustandsinformationen des Sicherheitssystemes anzeigbar sind. Moderne Kraftfahrzeuge weisen eine Vielzahl von Sensoren und Aktuatoren auf, welche individuell einstellbar sind. Um die Benutzerfreundlichkeit eines Fahrzeuges zu erhöhen kann auf dem Display der erfindungsgemäßen Schaltvorrichtung die Einstellungen der einzelnen Sensoren und Aktuatoren des Kraftfahrzeuges angezeigt werden, sodass eine einfache und eingängige Darstellung aller wichtigen Einstellungen möglich ist.

In einer vorteilhaften Ausgestaltung ist vorgesehen, dass das Display mindestens eines der folgenden Mittel verwendet: eine Leuchtdiode (LEDs), eine Organische Leuchtdiode (OLEDs), eine Flüssigkristallanzeige (LCDs), einen Plasmabildschirm, eine Kathodenstrahlröhre, ein Surface-Conduction Electron-Emitter Display (SED) oder einen Feldemissionsbildschirm (FED). Eine Flüssigkristallanzeige basiert auf der Verwendung spezieller Flüssigkristalle, welche die Polarisationsrichtung von Licht beeinflussen können, um Zeichen, Symbole oder Bilder darzustellen. Solcherart LCD-Bildschirme bestehen aus einer Mehrzahl von Segmenten, in welchen jeweils individuell die Orientierung der Flüssigkristalle mit einem elektrischen Feld gesteuert werden kann. Ein SED-Bildschirm weist eine ähnliche Funktionalität wie ein Kartodenstrahlbildschirm auf. Doch an Stelle eines einzelnen Elektronenemitters verwendet einen SED-Bildschirm in jedem einzelnen Subpixel ein Emitter. Ein Vorteil solcher Art gestalteter Bildschirme ist die schnelle Reaktionszeit sowie der erreichbare Kontrast. Die Auswahl, welcher der aufgezählten Typen in einem mobilen Identifikationsgeber jeweils Verwendung finden soll, hängt im Allgemeinen von dem Einsatzort bzw. den Einsatzbedingungen ab. Ist der mobile Identifikationsgeber starken Umwelteinflüssen ausgesetzt, so hat es sich als vorteilhaft erwiesen, insbesondere LEDs oder LCD-Anzeigen zu verwenden. Die genannten Mittel sind auch durch starke Umwelteinflüsse, wie etwa Feuchtigkeit, nicht zu beeinträchtigen und erlauben folglich die Verwendung des erfindungsgemäßen mobilen Identifikationsgebers auch in Geländefahrzeugen. Ist der mobile Identifikationsgeber nur geringen Umwelteinflüssen ausgesetzt, soll aber eine größere Anzahl von Informationen darstellen, können insbesondere SED oder FED-Displays Verwendung finden.

Eine weitere die Erfindung verbessernde Maßnahme sieht vor, dass das Display über eine Rechnereinheit und ein Datenübertragungssystem mit wenigstens einer Informationsquelle verbunden ist, wobei das Datenübertragungssystem zum uni- und/oder bidirektionalen Austausch mindestens einer Information zwischen dem Display und der Informationsquelle dient, insbesondere dass die Information auf dem Display anzeigbar ist. Ein solcherart ausgestalteter moblier identifikationsgeber kann weiter dadurch verbessert werden, dass die Information mittels des Datenübertragungssystems über eine serielle oder eine parallele Architektur übermittelbar ist. Alternativ oder ergänzend kann vorgesehen sein, dass die Informationsquelle mindestens eine der folgenden ist: ein GPS-System, ein Radio, ein Handy, eine Heizung, insbesondere eine Standheizung, ein Einparksystem, ein Fahrzeug- oder ein Motormanagement-System.

Durch die beschriebene Kombination der verbessernden Maßnahmen ist es einem Benutzer möglich, über die Einstellung und/oder den Zustand verschiedener Informationsquellen unterrichtet zu werden. Dazu kann insbesondere auf dem Display eine Anzahl von Piktogrammen angezeigt werden, die jeweils mit einer individuellen Informationsquelle verbunden sind. So ist es einem Benutzer leicht möglich, beispielsweise die Einstellung der Klimaanlage zu überprüfen. Es bedarf dazu nicht eines separat ausgestalteten Anzeigeelementes für diese Informationsquelle. Vielmehr kann das Display des mobilen Identifikationsgebers dazu dienen, sämtliche Informationen der Informationsquellen für einen Benutzer einfach zugängig darzustellen.

Eine die Erfindung verbessernde Maßnahme sieht vor, dass der mobile Identifikationsgeber eine Schnittstelle aufweist, insbesondere dass die Schnittstelle eine der folgenden Technologien aufweist: Wireless LAN (IEEE 802.11), FireWire (IEEE 1394), USB (Universal Serial Bus), HDMI (High Definition Multimedia Interface), IrDA (Infrared Data Association), Bluetooth, Unilink, ATA/ATAPI (Advanced Technology Attachment with Packet Interface), IEEE 488 oder IEEE 1284. Die aufgezählten Schnittstellen können insbesondere für eine Kommunikation zwischen dem mobilen Identifikationsgeber und einer externen Rechnereinheit genutzt werden. So können Informationen der Informationsquellen, Daten eines Motors oder eines Schließsystems auf die externe Rechnereinheit übertragen werden. Dieses hat sich insbesondere für eine Suche nach möglichen Fehlern bei Inspektionen in Werkstätten als vorteilhaft erwiesen.

Eine die Erfindung verbessernde Maßnahme sieht vor, dass das Betätigungselement zur berührungslosen Steuerung des Displays dient, insbesondere dass das Betätigungselement zur berührungslosen Steuerung eines Eingabeanzeigers (Cursor) des Displays dient. Das Betätigungselement ermöglicht in dieser Ausführungsvariante eine zweidimensionale Steuerung des Eingabeanzeigers auf dem Display. Mittels des Eingabeanzeigers können auf dem Display verschiedene Informationen abgerufen werden. So kann das Display eine Anzahl von Piktogrammen darstellen, wobei jedes Piktogramm einen individuellen Sensor oder Aktuator repräsentiert. Mittels einer Auswahl durch den Angabeanzeiger ist es einem Benutzer möglich eine aktuelle Einstellung des entsprechenden Aktuators oder Sensors abzurufen bzw. zu verändern. Das Betätigungselement muss dabei nicht berührt werden. Vielmehr reicht ein einfaches Bewegen eines Objektes, wie eines Fingers oder eines Stiftes, um den Eingabeanzeiger über das Display zu fahren. Diese Art von Betätigungselement verhindert so ein Verkratzen oder Beschädigen des mobilen Identifikationsgebers bzw. des Displays, da die Steuerung berührungslos möglich ist.

Eine weitere vorteilhafte Ausführungsvariante zeichnet sich dadurch aus, dass das Betätigungselement zur berührungslosen Eingabe von einer Information dient, insbesondere dass die Information auf dem Display anzeigbar ist. Mittels des Betätigungselementes können in dieser Ausführungsvariante Informationen in den mobilen Identifikationsgeber eingegeben werden. Eine im letzterem integrierte Rechnereinheit kann die Informationen weiterverarbeiten und mittels des Datenübertragungssystems an ein Sicherheitssystem des Kraftfahrzeuges übermitteln. Gleichfalls ist es denkbar, dass das Betätigungselement als eine Art Tastatur genutzt wird, um Zahlen und Buchstaben in die Rechnereinheit einzugeben, welche dann die entsprechenden Angaben auf dem Display anzeigt.

Eine weitere vorteilhafte Ausführungsvariante zeichnet sich dadurch aus, dass das Betätigungselement derart ausgestaltet ist, dass die Betätigungszone das Display überdeckt und folglich eine Bewegung des Objektes auf dem Display registriert werden kann. Durch eine entsprechende ortsauflösende Elektronik kann bestimmt werden, wo innerhalb der Betätigungszone auf das Display eingewirkt wurde. Bei dieser Ausführungsvariante formen das Display und die Betätigungszone eine Art Sensorbildschirm. Es brauch nur eine Bewegung eines Objektes in einen Bereich des Displays, um so ein Signal auszulösen.

Eine die Erfindung verbessernde Maßnahme sieht vor, dass der Sensor mindestens eine optoelektronische Messvorrichtung mit wenigstens fünf Lichtsendern und wenigstens einem Lichtempfänger enthält.

Eine weitere vorteilhafte Ausführungsvariante zeichnet sich dadurch aus, dass der Sensor mindestens eine optoelektronische Messvorrichtung mit wenigstens zwei Lichtsendern und wenigstens einem Lichtempfänger enthält, wobei den Lichtsendern Erfassungskeulen zugeordnet sind, die eine innerhalb der Betätigungszone liegende entfernte Zone und eine nähere Zone definieren, und dass das Betätigungselement ferner eine Auswerteeinheit aufweist, wobei die Auswerteeinheit eine Auslösung des Signals ausgehend von einer Bewegung des Objektes aus einer Position in der entfernten Zone in einer vorbestimmten Richtung in die nähere Zone auslöst .

In einer vorteilhaften Ausgestaltung ist vorgesehen, dass der Sensor ein HALIOS^{®} Baustein ist. Ein solcher HALIOS^{®} Baustein ermöglicht eine optische Überwachung einer Betätigungszone.

Eine weitere vorteilhafte Ausführungsvariante zeichnet sich dadurch aus, dass das Betätigungselement wenigstens einem Sendeelement für Strahlung im Wellenlängenbereich des Lichts und wenigstens einem Empfangselement zum Empfang zumindest eines Teils der vom Sendelement ausgestrahlten und vom Objekt rückgestrahlten Strahlung sowie mit einem im Strahlengang zwischen Sendeelement und Empfangselement angeordneten Lichtleiter aufweist, wobei der Lichtleiter selbst Lichtkopplungsmittel zum Einkoppeln für die am Objekt diffus gestreute, zuvor durch den Lichtleiter gestrahlte Strahlung aufweist.

Eine die Erfindung verbessernde Maßnahme sieht vor, dass die Lichtkopplungsmittel das vom Objekt quer zur Längserstreckung des Lichtleiters gestreute Licht in den Lichtleiter einkoppeln.

In einer vorteilhaften Ausgestaltung ist vorgesehen, dass das Betätigungselement einen Anordnung zum Messen oder Erkennen einer Veränderung an einem oder infolge eines rückstrahlenden Elements aufweist, wobei die Anordnung zum Messen oder Erkennen einer Veränderung an einem oder infolge eines rückstrahlenden Elements, das von der Anordnung durch ein für eine bestimmte Strahlung durchlässiges Medium getrennt ist, mit
- einem sensoraktiven Bereich im Medium mit wenigstens zwei Messstrecken mit zugeordneten Strahlungsquellen zum Einstrahlen der bestimmten Strahlung in das strahlungsdurchlässige Medium und mit wenigstens einem Strahlungsempfänger, wobei der Strahlungsempfänger im Überlappungsbereich der Zonen eines Maximums des Strahlungsstärkeverlaufes bei der im Ruhestand befindlichen sensoraktivem Bereich aus der dem rückstrahlenden Element gegenüberliegenden Seite des Mediums austretenden Rückstrahlung der dem Strahlungsempfänger zugeordneten Strahlungsquellen zur Erzeugung eines der empfangenen Strahlung entsprechenden Detektionssignales angeordnet ist,
- einer Schalteranordnung zu einem zeitabschnittsweisen Wirksamschalten jeder der einzelnen Messstrecken in einer aufeinanderfolgenden, sich wiederholenden Schaltfolge einer bestimmten Schaltfolgefrequenz,
- einer Einstellanordnung zur Einstellung einer derart bemessenen Strahlungsleistung der jeweiligen Messtrecke zugeordneten Strahlungsquelle, dass bei im Ruhestand befindlichen sensoraktivem Bereich jede Messtrecke einen Abschnitt des Detektionssignales erzeugt, dessen mittlerer Amplitudenwert gleich dem mittleren Amplitudenwert der der wenigstens einen anderen Messstrecke zugeordneten Abschnitte des Detektionssignales ist
- einer dem Strahlungsempfänger nachgeschalteten Filterschaltung zur Übertragung des auf eine Schwingung der Schaltfolgefrequenz modulierten Detektionssignales an eine Auswerteanordnung zur Erzeugung eines Steuer- und/oder Messwertsignales aus dem in der Auswerteanordnung gemessenen oder festgestellten Unterschied der den einzelnen Messstrecken zugeordneten Abschnitte des Detektionssignales.

Eine weitere vorteilhafte Ausführungsvariante zeichnet sich dadurch aus, dass die wenigstens zwei Messstrecken durch wenigstens einen Lichtsender und mehrere Lichtempfänger gebildet sind.

Erfindungsgemäß wird die Aufgabe auch durch ein Verfahren zur berührungslosen Auslösung eines Signals in einem mobilen Identifikationsgeber für ein Sicherheitssystem eines Kraftfahrzeuges durch eine Bewegung eines Objektes gelöst, wobei der mobile Identifikationsgeber ein Gehäuse aufweist, innerhalb des Gehäuses eine Elektronikeinheit zur Datenkommunikation mit einem fahrzeugseitigen Teil, insbesondere einem Sicherheitssystem angeordnet ist, und mindestens ein Betätigungselement zum Auslösen eines Signals in dem mobilen Identifikationsgeber vorgesehen ist und das Betätigungselement eine Betätigungszone im Bereich des Gehäuses überwacht, und das Signal durch eine Bewegung eines Objektes innerhalb der Betätigungszone ausgelöst wird.

Eine das Verfahren verbessernde Maßnahme sieht vor, dass mittels des Betätigungselements eine schlüssellosen Aktivierung eines Ver- und Entriegelungsvorganges einer Schließvorrichtung ausgelöst, insbesondere dass die schlüssellose Aktivierung berührungslos innerhalb der Betätigungszone ausgelöst wird.

Eine weitere vorteilhafte Ausführungsform zeichnet sich dadurch aus, dass zur Aktivierung des Verriegelungsvorgangs ein Benutzer in die Betätigungszone tastet.

Eine das Verfahren verbessernde Maßnahme sieht vor, dass zur Aktivierung des Entriegelungsvorgang ein Benutzer über die Betätigungszone streicht.

Eine das Verfahren verbessernde Maßnahme sieht vor, dass die Betätigungszone durch das Betätigungselement optisch überwacht wird, und durch eine Erfassung eines vorgegebenen Bewegungsmusters durch eine Bewegung des Objektes das Signal ausgelöst wird. Bei dieser Ausführungsvariante reicht nicht nur eine einfache, beliebige Bewegung des Objektes. Vielmehr muss die Bewegung mit einem vordefinierten Bewegungsmuster übereinstimmen. Die Bewegung des Objektes wird erfindungsgemäß registriert und mit einem Bewegungsmuster verglichen. Stimmen die Bewegung des Objektes und das Bewegungsmuster überein, so wird das Signal ausgelöst. Eine das Verfahren verbessernde Maßnahme sieht vor, dass das Bewegungsmuster eine zumindest zweidimensionale Bewegung des Objektes in der Betätigungszone beinhaltet, insbesondere dass das Bewegungsmuster eine zumindest dreidimensionale Bewegung des Objektes in der Betätigungszone beinhaltet. Weiterhin sieht eine verbessernde Maßnahme vor, dass ein zweites Bewegungsmuster ein zweites Signal auslöst, wobei insbesondere das Bewegungsmuster und das zweite Bewegungsmuster unterschiedlich sind. Eine weitere vorteilhafte Ausführungsvariante zeichnet sich dadurch aus, dass in dem Bewegungsmuster das Objekt in einer ersten Richtung durch die Betätigungszone bewegt wird und in dem zweiten Bewegungsmuster das Objekt in einer zweiten Richtung bewegt durch die Betätigungszone wird, insbesondere dass die erste Richtung und die zweite Richtung entgegengesetzt sind.

Eine weitere die Erfindung verbessernde Maßnahme sieht vor, dass durch das Ausführen des Bewegungsmusters eine schlüssellosen Aktivierung eines Ver- und Entriegelungsvorganges einer Schließvorrichtung ausgelöst wird, insbesondere dass die schlüssellose Aktivierung berührungslos innerhalb der Betätigungszone ausgelöst wird. Eine weitere vorteilhafte Ausführungsvariante zeichnet sich dadurch aus, dass zur Aktivierung des Verriegelungsvorgangs das Objekt gemäß dem Bewegungsmuster in der ersten Richtung durch die Betätigungszone bewegt wird. Weiterhin sieht eine verbessernde Maßnahme sieht vor, dass zur Aktivierung des Entriegelungsvorgang das Objekt gemäß dem zweiten Bewegungsmuster in der zweiten Richtung durch die Betätigungszone bewegt wird. Eine weitere vorteilhafte Ausführungsform zeichnet sich dadurch aus, dass zur Aktivierung des Entriegelungsvorgang ein gradliniges Bewegungsmuster ausgeführt wird.

Eine weitere vorteilhafte Ausführungsform zeichnet sich dadurch aus, dass ein Ver- oder Entriegelungsvorgang der Schließvorrichtung auf einem Display angezeigt wird.

Eine das Verfahren verbessernde Maßnahme sieht vor, dass das Betätigungselement einen Sensor aufweist und der Sensor wenigstens zwei ersten Lichtquellen, die Licht zeitsequenziell getaktet, phasenweise aussenden, und wenigstens einem Empfänger zum Empfang zumindest des von den ersten Lichtquellen stammenden, taktsynchronen Wechsellichtanteils, aufweist.

Eine weitere vorteilhafte Ausführungsvariante zeichnet sich dadurch aus, dass der Sensor eine durch wenigstens eine Lichtquelle eingestrahlte Lichtintensität so regelt, dass ein taktsynchrone Wechsellichtanteil, der zwischen verschiedenen Phasen auftritt, am Empfänger zu Null wird und zur Regelung der eingestrahlten Lichtintensität ein Empfangssignal am Empfänger bezüglich der Phasenlage bestimmt wird und damit eine Stellgröße erzeugt wird.

Eine das Verfahren verbessernde Maßnahme sieht vor, dass zur Erkennung einer Bewegung mit einem mobiler Identifikationsgeber nach einem der vorhergehenden Ansprüche mit den Schritten:
- Aussenden einer Strahlung im Wellenlängenbereich des Lichts,
- Durchstrahlen des Lichts durch einen Lichtleiter bis zum Objekt,
- Rückstrahlen zumindest eines Teils des Lichts vom Objekt und Rückkoppeln des rückgestrahlten Lichts in den Lichtleiter,
- Empfangen des rückgestrahlten Lichts unter Bildung eines Eingangssignals,
- Auswerten des Eingangssignals zur Bestimmung der Bewegung und/oder Position des Objekts,
- das diffus rückgestreute Licht über Lichtkopplungsmittel des Lichtleiters selbst in den Lichtleiter eingekoppelt wird.

Eine weitere vorteilhafte Ausführungsform zeichnet sich dadurch aus, dass die Lichtkopplungsmittel das vom Objekt rückgestreute Licht quer zur Längserstreckung des Lichtleiters in den Lichtleiter einkoppeln.

Eine das Verfahren verbessernde Maßnahme sieht vor, dass die vom Sendeelement durch den Lichtleiter gestrahlte Strahlung ausgehend von der dem Objekt gegenüberliegenden Seite quer durch den Lichtleiter gestrahlt wird, bevor sie vom Objekt rückgestreut wird.

Eine weitere vorteilhafte Ausführungsvariante zeichnet sich dadurch aus, dass die vom Sendeelement entlang des Lichtleiters gestrahlte Strahlung von den Lichtkopplungsmitteln zumindest teilweise aus dem Lichtleiter ausgekoppelt wird, bevor sie vom Objekt gestreut wird.

Ferner ist die Erfindung auch auf ein Fahrzeug, insbesondere ein Kraftfahrzeug mit einem mobilen Identifikationsgeber, nach einem der Ansprüche 1 bis 24 gerichtet.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen:
- Figur 1: eine schematische Darstellung eines mobilen Identifikationsgebers, der in Datenkommunikation mit einer Schließvorrichtung eines Kraftfahrzeuges steht,
- Figur 2: ein Gehäuse des mobilen Identifikationsgebers in dreidimensionaler Ansicht,
- Figur 3: eine Seitenansicht eines Lichtleiters mit Lichtkopplungsmitteln bei Annäherung eines Objektes,
- Figur 4: eine Blockschaltung eines Verfahrens zur Ermittlung eines fremdlicht unabhängigen optischen Signales und
- Figur 5: eine weitere Blockschaltung eines Verfahrens zur Ermittlung eines fremdlicht unabhängigen optischen Signales.

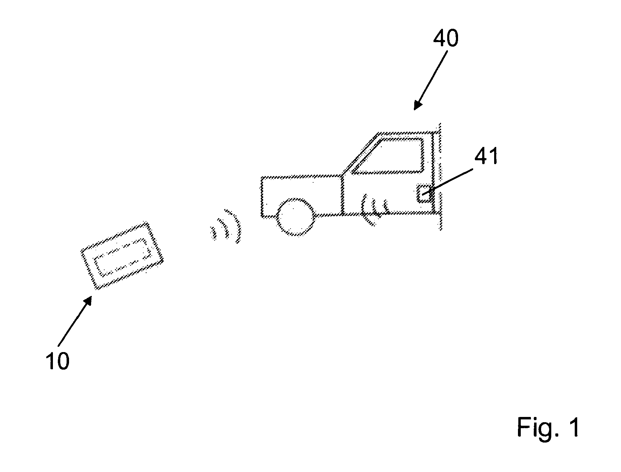

In Figur 1 ist rein schematisch ein mobiler Identifikationsgeber 10 dargestellt, der mit einer Sende- und Empfangseinheit 41 eines Kraftfahrzeuges 40 in Kommunikation steht. Der mobile Identifikationsgeber 10 weist unter anderem eine Elektronikeinheit auf, die mit einer Batterie als Energiespeicher versorgt wird.

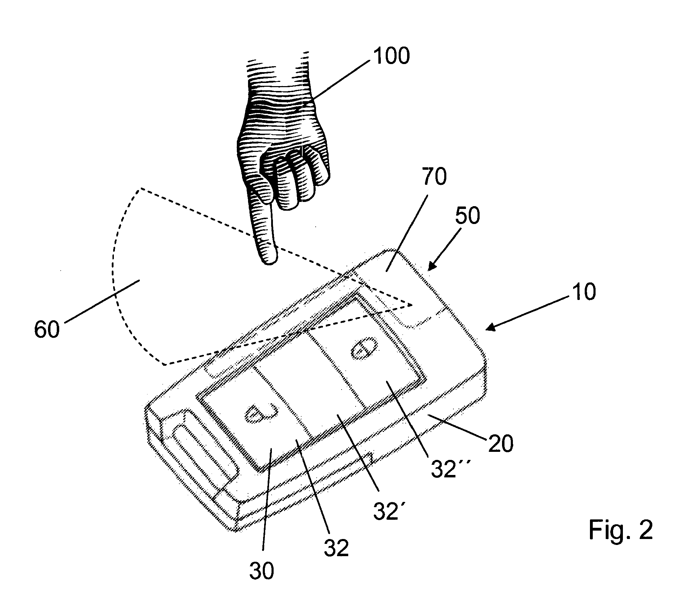

In Figur 2 ist der quaderartige mobile Identifikationsgeber 10 gezeigt. Dieser weist ein Gehäuse 20 auf in dessen Oberseite ein Display 30 eingelassen ist. Der mobile Identifikationsgeber 10 dient dazu, Anweisungen an das Sicherheitssystem des Kraftfahrzeuges 40 zu übermitteln. So wird vorrangig das Ver- und Entriegeln einer Schließvorrichtung des Kraftfahrzeuges 40 gesteuert. Denkbar ist es aber auch, dass Informationen über den Fahrzeugzustand - wie etwa die Temperatur oder den Zustand der Fahrzeugbeleuchtung - an den mobilen Identifikationsgeber 10 übertragen werden. Das Display 30 ermöglicht es diese verschiedenen Informationen anzuzeigen.

Um ein Signal in dem mobilen Identifikationsgeber 10 auszulösen, ist erfindungsgemäß vorgesehen, dass ein Betätigungselement 50 eine Betätigungszone 60 im Bereich des Gehäuses 20 überwacht und die Auslösung des Signales durch eine Bewegung eines Objekts 100 innerhalb der Betätigungszone erfolgt. In Fig. 2 ist das Objekt 100 eine Hand, welche durch die Betätigungszone 60 geführt wird. Je nach Ausgestaltung des Betätigungselementes 50 bedarf es unterschiedlichen Bewegung oder vordefinierten Bewegungsmustern, um das Signal auszulösen. So kann beispielsweise das Betätigungselement als ein Taster dienen, mittels dem einzelne Signale ausgelöst werden können.

In einer weiteren Ausführungsvariante kann das Betätigungselement auch als ein dreidimensionale Bewegung oder Bewegungsmuster erfassender Detektor ausgestaltet sein. So könnte in dieser Ausführungsvariante eine streichende Bewegung über den mobilen identifikationsgeber 10 im Bereich der Betätigungszone 60 zu einem Entriegelungsvorgang einer im Kraftfahrzeug integrierten Schließvorrichtung führen.

In Figur 2 ist das Display 30 in drei Bereich 32, 32', 32" unterteilt. Durch eine Bewegung innerhalb der Betätigungszone in einem der Eingabebereiche 32, 32', 32" kann der mobile Identifikationsgeber 10 aktiviert werden. Beispielhaft soll dieses an einem Ver- bzw. Entriegeln der Schließvorrichtung 100 des Kraftfahrzeuges 40 beschrieben werden. Der Eingabebereich 32" zeigt das Symbol eines geschlossenen Schlosses an. Führt das Objekt innerhalb der Betätigungszone oberhalb des Eingabebereiches 32" eine Bewegung durch, so übersendet der mobile Identifikationsgeber 10 ein Schließsignal an die Schließvorrichtung 100 des Kraftfahrzeuges 40, welches zu einer Verriegelung führt. Erfindungsgemäß kann nach einer erfolgreichen Verriegelung eine Kommunikation zwischen dem Kraftfahrzeug 40 und dem mobilen Identifikationsgeber 10 stattfinden, die in einer Änderung der dem Eingabebereich 32" unterlegten Farbe resultiert. Somit ist eine visuelle Verifizierung der erfolgreichen Verriegelung durch den Benutzer möglich. Möchte der Benutzer das Kraftfahrzeug 40 wieder entriegeln, so genügt eine Bewegung in der Betätigungszone über dem Eingabebereich 32, auf dem das Symbol eines geöffneten Schlosses wiedergegeben ist.

In der dargestellten Ausführungsvariante ist das Betätigungselement 50 innerhalb des Gehäuses 20 unter einem Abdeckelement 70 angeordnet. Von dem Betätigungselement 50 wird in direkter oder indirekter Weise Licht abgestrahlt, welches die Betätigungszone 60 aufspannt. Um dieses zu ermöglichen, muss das Abdeckelement 70 lichtdurchlässig ausgestaltet sein. Zusätzlich schützt das Abdeckelement 70 das Betätigungselement 50 vor Umwelteinflüssen wie Feuchtigkeit oder Schmutz. In einer vorteilhaften Ausführungsvariante ist das Abdeckelement 70 stoffschlüssig in das Gehäuse 20 eingebracht.

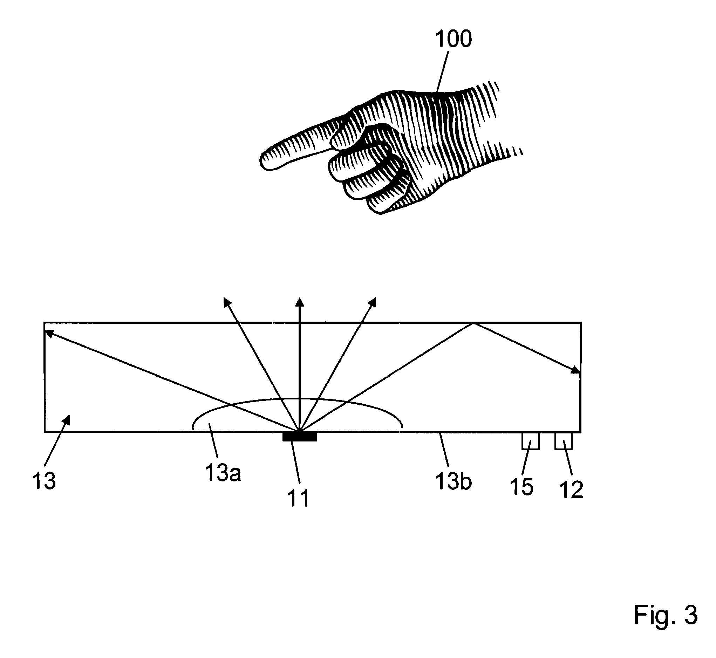

Die Figur 3 zeigt einen im Betätigungselement integrierten Sensor zur optoelektronischen Erkennung der Bewegung und/oder der Position eines Objekts 100. Erkannt werden kann zum Beispiel die Annäherung eines Fingers an den Sensor. Die Vorrichtung weist wenigstens ein Sendeelement 11 zum Aussenden von Strahlung im Wellenlängenbereich des Lichts von Infrarot bis Ultraviolett und wenigstens ein Empfangselement 12 zum Empfang zumindest eines Teils der vom Sendelement 11 ausgestrahlten und am Objekt 100 gestreuten Strahlung auf. Ferner ist im Strahlengang zwischen Sendeelement 11 und Empfangselement 12 ein Lichtleiter 13 angeordnet. Dieser Lichtleiter 13 besitzt selbst Lichtkopplungsmittel zum Einkoppeln für die am Objekt 100 diffus gestreute, zuvor durch den Lichtleiter 13 gestrahlte Strahlung, die am Objekt 100 einer Winkeländerung unterworfen wurde. Die Strahlung wird vom Lichtkopplungsmittel 13a gemäß Fig. 3 dadurch eingekoppelt, dass das Lichtkopplungsmittel im Lichtleiter so geformt ist, dass quer zum Lichtleiter einfallende Strahlen ab einem bestimmten Winkel total reflektiert und anschließend im Lichtleiter weitergeleitet werden. Quer zum Lichtleiter eintreffendes Licht wird also je nach den optischen Eigenschaften des Lichtleiters nahezu im rechten Winkel umgeleitet.

Das Sendeelement 11 kann wie in Fig. 3 quer durch den Lichtleiter durchstrahlen, so dass die Strahlung zunächst nicht in den Lichtleiter gelangt, da diese nicht der hierfür erforderlichen Totalreflexion unterliegt. Wird das Licht dann jedoch vom Objekt 100 rückgestreut, wird das rückgestreute Licht im Lichtleiter an den Lichtkopplungsmitteln 13a total reflektiert und anschließend im Lichtleiter "gefangen". Mit anderen Worten sind die Reflektionseigenschaften des Lichtleiters 13 und die Anordnung des Sendeelements gegenüber dem Lichtleiter so, dass das Sendeelement 11 das Licht im Wesentlichen durch den Lichtleiter durchstrahlen kann. Wird das Licht jedoch vom Objekt 100 auch nur mit einer geringen Winkeländerung diffus rückgestreut, wird im Ausführungsbeispiel eine Totalreflexion des "eingefangenen" Lichtstrahls möglich, so dass das Licht dann im Lichtleiter weiter geleitet werden kann. Das Sendelement befindet sich dabei üblicherweise auf der Seite 13b des Lichtleiters, die von dem sich bewegenden und/oder annähernden Objekt 100 abgewandt ist. Dadurch ergibt sich nach außen eine geschlossene Oberfläche, rückseitig können jedoch alle mehr oder weniger empfindlichen Bauelemente angebracht sein.

Das Betätigungselement kann auch als eine Art Tastatur ausgeformt sein. Dazu weist der Lichtleiter 13 mehrere Lichtkopplungsmittel 13a auf. Vorzugsweise sind die Lichtkopplungsmittel 13a jeweils einem Sendeelement 11 räumlich zugeordnet, so dass die Sendelemente 11 in der Form einer Tastatur angeordnet sein können. An jeder der mehreren Taste befindet sich das zugeordnete Lichtkopplungsmittel 13a, das vorzugsweise bogen- oder kreissegmentförmig ausgebildet sein kann. Für jede Taste wird bevorzugt ein Sendeelement 11 in Form einer Leuchtdiode verwendet. Alle Sendeelemente 11 wirken durch eine geeignete Optik auf das Empfangselement 12, das zugleich von einer zusätzlichen Kompensations-LED 15 beleuchtet wird. Die Lichtkopplungsmittel 13a können zum Beispiel durch Einfräsung in den Lichtleiter 13 hergestellt werden. Da diese Einfräsung bzw. das Lichtkopplungsmittel 13a überhaupt nur zum Teil in den Lichtleiter 13 eindringt, kann im verbleibenden Lichtleiter reflektiertes Licht von jeder Tastenposition zum Empfangselement 12 gelangen. Vorzugsweise dringt das Lichtkopplungsmittel 13a nur zu etwa 50% in den Lichtleiter ein.

Grundsätzlich lassen sich Sendeelemente und Empfangselemente auch umkehren. So können z. B. den Tasten mehrere Empfangselemente, z. B. jeder Taste eine Empfangselement zugeordnet werden, während an geeigneter Stelle vorzugsweise wenigstens zwei Sendeelemente angeordnet werden. Es ist bei der Anordnung der Sendeelemente nur sicherzustellen, dass ein Lichtgang bis zu den Empfangselementen möglich ist.

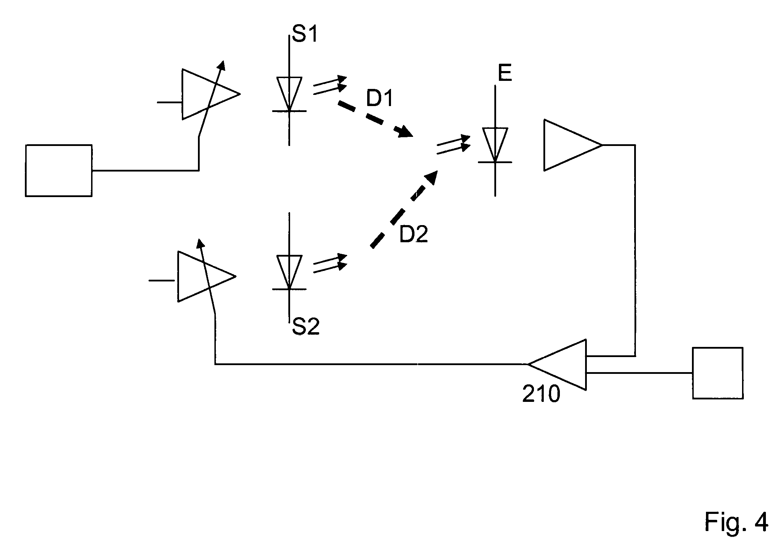

Um die Betätigungszone optisch zu überwachen, kann das Betätigungselement bzw. der Sensor spezielle Verfahren anwenden. Insbesondere sollten Umwelteinflüsse nicht zu einer Beeinträchtigung einer Funktionsweise des Betätigungselementes führen. In Figur 4 senden zwei erste Lichtquellen S1, S2, hier LEDs, rechteckförmig moduliertes Licht im Gegentakt zum Empfänger E. Eine Sendeamplitude ist regelbar. Der Empfänger mit Bandpasscharakteristik verstärkt das Empfangssignal und führt es einem Regler 10 zu. Dieser Regler stellt nun die Amplitude der regelbaren ersten Lichtquelle S1 so nach, dass das Wechselsignal am Empfängerausgang null wird. Der Regler 210 bewertet hierzu das Empfangssignal synchron zum Sendertakt, um so die Regelrichtung zu detektieren. Der Regler 210 zerfällt in zwei Teile: einer Detektion, welcher Sender stärker ist, und einem integrator zur Erzeugung der Stellgröße.

Eine weitere Variante beruht auf der Beobachtung, dass zur Beurteilung, welcher Sender stärker sendet es ausreichend ist, das Empfangssignal bezüglich der Phasenlage zu beurteilen. Eine zusätzliche Betrachtung der Amplitude ist grundsätzlich nicht erforderlich. Aufgrund dieser Erkenntnis lassen sich digitale Ausgestaltungen schnell und günstig realisieren, ohne dass es zu Fehlsignalen kommt. Dabei besteht sowohl die Möglichkeit, die so gewonnene Regelgröße als Licht über einen der Sender oder eine weitere Lichtquelle als Kompensationslichtquelle wieder in die Regelstrecke einzubringen, alternativ kann aber auch das so gewonnene Signal als Stromsignal am Empfänger hinzuaddiert werden. Die zweite Alternative berücksichtigt zwar nicht sämtliche Störeinflüsse, die sich aufgrund der verwendeten Bauteile ergeben können, unter Umständen genügt jedoch eine derartige Lösung insbesondere für günstigere Ausführungsformen, bei denen es eventuell nicht auf eine vollständige Positions- oder Annäherungserkennung ankommt.

Zur Regelung der eingestrahlten Lichtintensität wird nicht mehr das Empfangssignal wie bei einer analogen Auswertung hinsichtlich seiner Amplitude beurteilt und bewertet, sondern stattdessen wird das Empfangssignal am Empfänger E bezüglich der Phasenlage bestimmt und damit eine Stellgröße erzeugt. Diese Stellgröße R kann entweder als Lichtsignal durch einen entsprechenden Strom an wenigstens eine der ersten Lichtquellen S1, S2 übermittelt werden, es ist jedoch ebenso möglich, das Ganze durch ein Stromsignal dem Empfänger durch Stromaddition zuzuleiten. Die weitere Lichtquelle, die die Lichtintensität regelt, kann insofern eine der ersten Lichtquellen S1, S2 sein. Alternativ kann es aber auch eine weitere Lichtquelle K sein, die dem Empfänger zugeordnet ist, wobei durch diese weitere Lichtquelle K die Regelung so erfolgt, dass sie ihre Phase wechselt, indem diese weitere Lichtquelle K über wenigstens ein ExOr-Gatter oder wenigstens ein ExNor-Gatter angesteuert wird.

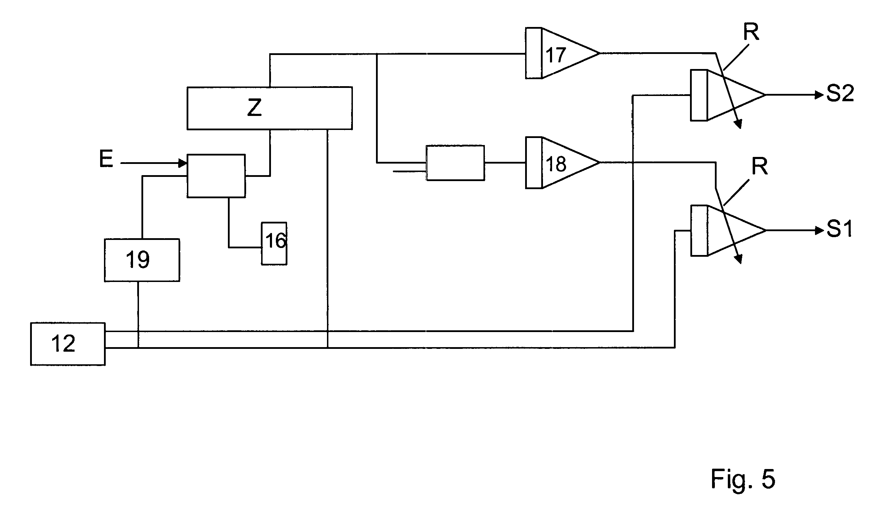

Die Implementierung kann gemäß Fig. 5 so erfolgen, dass das digitalisierte Empfangssignal der Datenleitung eines D-Flip-Flops 16 zugeführt wird. Der Takt für das Flip-Flop wird - bedarfsweise mittel Verzögerungsschaltung 19 verzögert - so aus dem Sendetakt des Taktgebers 12 abgeleitet, dass beispielsweise das Taktsignal von Sender S1 phasenrichtig und das von Sender S2 invertiert reproduziert wird. Diese so gespeicherten Werte dienen als Steuersignal für die Zählrichtung des Zählers Z. Der Zählerstand wird mittels eines DA-Umsetzers 17, 18 in die Sendeamplitude von beispielsweise Sender S2 umgesetzt. Bei Bedarf wird die Sendeleistung von Sender S1 mit dem invertierten Zählerstand oder dem invertierten DA-Umsetzer-Ergebnis angesteuert.

Zur Detektion einer Bewegung in der Betätigungszone können zwei Messstrecken zwischen Sendelement und Empfangselement aufgebaut werden. Während das Sendeelement die Strahlung aussendet, ermittelt das Empfangselement die an dem Objekt reflektierte Rückstrahlung. Die beiden Messstrecken werden über einen Taktgenerator zeitabschnittsweise betrieben. Dabei sind die Taktsignale über einen Multiplexer geleitet, um insbesondere bei einer Tastatur weitere Sendeelemente anzusteuern. Die vom Empfangselement bestimmten Detektionssignale werden gefiltert und in einem vom Taktgenerator angesteuerten Synchrondemodulator wieder in den einzelnen Messstrecken zuordenbare Signale zerlegt. Das durch Vergleichen der Messstrecken ermittelte Nutzsignal wird einer Auswerteeinheit zugeleitet, die in Abhängigkeit davon das Signal in dem mobiler Identifikationsgeber schaltet.

Findet auf beiden Messstrecken eine gleichmäßige Reflexion statt, so ergibt sich ein Nutzsignal zu Null. Das Nutzsignal wird einer Signalzentrierstufe zugeführt. Je nach dem, ob an deren Ausgang eine Regelspannung anliegt oder nicht, wird mit dieser Regelspannung dann die in die Messstrecken eingestrahlte Strahlungsmenge geregelt, so dass sich in Abhängigkeit einer Zeitkonstante eine Rückregelung des Detektionssignals ergibt. Dies erfolgt über die Kompensations-LED, die mit dem gegenphasigen Taktsignal betrieben und aufgrund des Nutzsignals am Regler geregelt wird. Damit ist es möglich, dynamische Änderungen zu erfassen, wobei gleichzeitig eine zuverlässige Fremdlichtkompensation stattfindet.

Als Kompensations-LED kann eine Leuchtdiode vorgesehen sein, die entsprechend geregelt bedarfsweise auch im Dauerbetrieb gehalten wird und mit einer taktabhängige Strahiungsieistung in Abhängigkeit der zur Kompensation des jeweils gerade getakteten Sendeelements erforderlichen Kompensation betrieben wird.

### Bezugszeichen

- 10: Mobile Identifikationsgeber
- 11: Sendeelement
- 12: Empfangselement
- 13: Lichtleiter
- 13a: Lichtkopplungsmittel
- 15: Kompensations-LED
- 20: Gehäuse
- 30: Display
- 32,32',32": Betätigungsfläche
- 40: Kraftfahrzeuges
- 41: Sende- und Empfangseinheit
- 50: Betätigungselement
- 60: Betätigungszone
- 70: Abdeckelement
- 100: Objekt

## Patentansprüche

1. Mobiler identifikationsgeber (10) für ein Sicherheitssystem eines Kraftfahrzeuges,
mit einem Gehäuse, Innerhalb dessen eine Elektronikeinheit zur Datenkommunikation mit einem fahrzeugseitigen Teil, insbesondere des Sicherheitssystems angeordnet ist,
wobei mindestens ein Betätigungselement zum Auslösen eines Signals in dem mobilen Identifikationsgeber (10) vorgesehen ist,
wobei das Betätigungselement eine Betätigungszone (60) im Bereich des Gehäuses optisch überwacht, und
die Auslösung des Signals durch eine Bewegung eines Objektes (100) innerhalb der Betätigungszone (60) erfolgt,
**dadurch gekennzeichnet,**
**dass** mittels des Betätigungselements (50) eine schlüssellose Aktivierung eines Ver- und Entriegelungsvorganges einer Schließvorrichtung auslösbar ist, wobei die schlüssellose Aktivierung berührungslos innerhalb der Betätigungszone (60) auslösbar ist.

2. Mobiler identifikationsgeber (10) nach Anspruch 1,
**dadurch gekennzeichnet,**
**dass** das Betätigungselement (50) als ein Taster, ein Schleberegler, ein Annäherungsdetektor, ein Bewegungsdetektor und/oder ein 3-dimensionale Bewegungen erfassender Detektor dient.

3. Mobiler Identifikationsgeber (10) nach einem der vorhergehenden Ansprüche,
**dadurch gekennzeichnet,**
**dass** die Betätigungszone (60) eine optisch überwachte dreidimensionale Zone ist und/oder das Objekt (100) eine menschliche Hand, ein menschlicher Finger oder ein mechanisches Bauteil ist, insbesondere dass das Betätigungselement (50) einen Sensor aufweist, besonders bevorzugt dass der Sensor optoelektronisch ausgestaltet ist, Insbesondere dass der Sensor mindestens einen Lichtsender und wenigstens einen Lichtempfänger aufweist, wobei mittels des Sensors eine Richtung einer Bewegung des Objektes (100) In der Betätigungszone (60) bestimmbar ist, wobei insbesondere der Lichtsender eine Leuchtdiode (LEDs), eine Organische Leuchtdiode (OLEDs) oder Laserdiode ist, Insbesondere dass der Lichtsender ein infrarotes Licht emittiert.

4. Mobiler Identifikationsgeber (10) nach einem der vorhergehenden Ansprüche,
**dadurch gekennzeichnet,**
**dass** das Betäügungseiement (50) in dem Gehäuse angeordnet ist, wobei insbesondere ein Abdeckelement (70) das Betätigungselement (50) überdeckt, besonders bevorzugt dass das Abdeckelement (70) stoffschlüssig mit dem Gehäuse verbunden ist und wobei insbesondere das Abdeckelement (70) lichtdurchlässig ist, insbesondere dass das Abdeckelement (70) lichtdurchlässig für die von dem Lichtsender emittierte Wellenlänge ist, besonders bevorzugt dass die Betätigungszone (60) oberhalb einer dem Objekt (100) zugewandten Außenseite des Abdeckelementes angeordnet ist.

5. Mobiler Identifikationsgeber (10) nach einem der vorhergehenden Ansprüche,
**dadurch gekennzeichnet,**
**dass** das Abdeckelement (70) lichtundurchlässig ist und das Betätigungselement (50) eine vom Objekt (100) abgewandte Unterseite des Abdeckelementes überwacht und/oder dass die Betätigungszone (60) oberhalb einer dem Objekt (100) zugewandten Außenfläche des Gehäuses angeordnet ist, wobei insbesondere die Außenseite des Abdeckelementes eine Oberflächenstruktur aufweist und/oder insbesondere dass die Betätigungszone (60) eine tropfenartige Form aufweist.

6. Mobiler Identifikationsgeber (10) nach einem der vorhergehenden Ansprüche,
**dadurch gekennzeichnet,**
**dass** der mobile Identifikationsgeber (10) ein Display aufweist, wobei kraftfahrzeugseitige Zustandsinformationen durch das Display darstellbar sind, wobei insbesondere das Display (50) mindestens eines der folgenden Mittel verwendet: eine Leuchtdiode (LEDs), eine Organische Leuchtdiode (OLEDs), eine Flüssigkristallanzeige (LCDs), einen Plasmabildschirm, eine Kathodenstrahlröhre, ein Surface-Conduction Electron-Emltter Display (SED) oder einen Feldemissionsbildschirm (FED).

7. Mobiler Identifikationsgeber (10) nach einem der vorhergehenden Ansprüche,
**dadurch gekennzeichnet,**
**dass** das Betätigungselement (50) zur berührungslosen Steuerung des Displays dient und/oder das Betätigungselement (50) zur berührungslosen Eingabe von einer Information dient, insbesondere dass die Information auf dem Display anzeigbar ist, und/oder insbesondere dass das Betätigungselement (50) zur berührungslosen Steuerung eines Eingabeanzeigers (Cursor) des Displays dient.

8. Mobiler Identifikationsgeber (10) nach einem der Ansprüche 6 und 7,
**dadurch gekennzeichnet,**
**dass** die Betätigungszone (60) das Display überdeckt und/oder dass der Sensor mindestens eine optoelektronische Messvorrichtung mit wenigstens fünf Lichtsendern und wenigstens einem Lichtempfänger enthält.

9. Mobiler Identifikationsgeber (10) nach einem der vorhergehenden Ansprüche,
**dadurch gekennzeichnet,**
**dass** der Sensor mindestens eine optoelektronische Messvorrichtung mit wenigstens zwei Lichtsendern und wenigstens einem Lichtempfänger enthält, wobei den Lichtsendern Erfassungskeulen zugeordnet sind, die eine innerhalb der Betätigungszone (60) liegende entfernte Zone und eine nähere Zone definieren, und dass das Betätigungselement (50) ferner eine Auswerteeinheit aufweist, wobei die Auswerteeinheit eine Auslösung des Signals ausgehend von einer Bewegung des Objektes (100) aus einer Position in der entfernten Zone in einer vorbestimmten Richtung in die nähere Zone auslöst.

10. Mobiler Identifikationsgeber (10) nach einem der vorhergehenden Ansprüche,
**dadurch gekennzeichnet,**
**dass** das Betätigungselement (50) wenigstens einem Sendeelement (11) für Strahlung im Wellenlängenbereich des Lichts und wenigstens einem Empfangselement (12) zum Empfang zumindest eines Teils der vom Sendelement (11) ausgestrahlten und vom Objekt (100) (10) rückgestrahlten Strahlung sowie mit einem im Strahlengang zwischen Sendeelement (11) und Empfangselement (12) angeordneten Lichtleiter (13) aufweist, wobei der Lichtleiter (13) selbst Lichtkopplungsmittel zum Einkoppeln für die am Objekt (10) diffus gestreute, zuvor durch den Lichtleiter (13) gestrahlte Strahlung aufweist, wobei insbesondere die Llchtkopplungsmittel (13a) das vom Objekt (100) quer zur Längserstreckung des Lichtleiters (13) gestreute Licht in den Lichtleiter (13) einkoppeln.

11. Mobiler Identifikationsgeber (10) nach einem der vorhergenden Ansprüche,
**dadurch gekennzeichnet,**
**dass** das Betätigungselement (50) einen Anordnung zum Messen oder Erkennen einer Veränderung an einem oder infolge eines rückstrahlenden Elements aufweist, wobei die Anordnung zum Messen oder Erkennen einer Veränderung an einem oder Infolge eines rückstrahlenden Elements, das von der Anordnung durch ein für eine bestimmte Strahlung durchlässiges Medium getrennt ist, mit
- einem sensoraktiven Bereich im Medium mit wenigstens zwei Messstrecken mit zugeordneten Strahlungsquellen zum Einstrahlen der bestimmten Strahlung in das strahlungsdurchlässige Medium und mit wenigstens einem Strahlungsempfänger, wobei der Strahlungsempfänger im Oberlappungsbereich der Zonen eines Maximums des Strahlungsstärkaverlaufes bei der im Ruhestand befindlichen sensoraktivem Bereich aus der dem rückstrahlenden Element gegenüberliegenden Seite des Mediums austretenden Rückstrahlung der dem Strahlungsempfänger zugeordneten Strahlungsquellen zur Erzeugung eines der empfangenen Strahlung entsprechenden Detektlonsslgnaies angeordnet ist,
- einer Schalteranordnung zu einem zeitabschnittsweisen Wirksamschalten jeder der einzelnen Messstrecken in einer aufeinanderfolgenden, sich wiederholenden Schaltfolge einer bestimmten Schaltfolgefrequenz,
- einer Elnstellanordnung zur Einstellung einer derart bemessenen Strahlungsleistung der jeweiligen Messtrecke zugeordneten Strahlungsquelle, dass bei im Ruhestand befindlichen sensoraktivem Bereich jede Messtrecke einen Abschnitt des Detektlonssignales erzeugt, dessen mittlerer Amplitudenwert gleich dem mittleren Amplitudenwert der der wenigstens einen anderen Messstrecke zugeordneten Abschnitte des Detaktionasignales ist
- einer dem Strahlungsempfänger nachgeschalteten Fliterschaltung zur Übertragung des auf eine Schwingung der Schaltfolgefrequenz modulierten Detektionssignales an eine Auswerteanordnung zur Erzeugung eines Steuer- und/oder Messwertsignales aus dem in der Auswerteanordnung gemessenen oder festgestellten Unterschied der den einzelnen Messstrecken zugeordneten Abschnitte des Detektlonsslgnales, wobei Insbesondere die wenigstens zwei Moßetrecken durch wenigstens einen Lichtsender und mehrere Lichtempfänger gebildet sind.

12. Verfahren zur berührungslosen Auslösung eines Signals in einem mobilen Identifikationsgeber (10) für ein Sicherheitssystem eines Kraftfahrzeuges durch eine Bewegung eines Objektes (100), wobei
der mobile identifikationageber (10) ein Gehäuse aufweist,
innerhalb des Gehäuses eine Elektronikeinheit zur Datenkommunikation mit einem fahrzeugseitigen Teil, insbesondere einem Sicherheitssystem angeordnet ist, und
mindestens ein Betätigungselement (50) zum Auslösen eines Signals in dem mobilen Identifikationsgeber (10) vorgesehen ist,
wobei das Betätigungselement (50) eine Betätigungszone (60) im Bereich des Gehäuses überwacht, und wobei
das Signal durch eine Bewegung eines Objektes (100) innerhalb der Betätigungszone (60) ausgelöst wird, **dadurch gekennzeichnet, dass** mittels des Betätigungselements (50) eine schlüssellose Aktivierung eines Ver- und Entriegelungsvorganges einer Schließvorrichtung ausgelöst wird, und dass die schlüssellose Aktivierung berührungslos innerhalb der Betätigungszone (60) ausgelöst wird.

13. Verfahren nach Anspruch 12,
**dadurch gekennzeichnet, dass** zur Aktivierung das Verriegelungsvorgangs ein Benutzer in die Betätigungszone (80) tastet.

14. Verfahren nach Anspruch 13,
**dadurch gekennzeichnet,**
**dass** zur Aktivierung des Entriegelungsvorgang ein Benutzer über die Betätigungszone (60) streicht und/oder dass ein Ver- oder Entriegelungsvorgang der Schlleßvorrlchtung auf einem Display angezeigt wird.

15. Verfahren nach einem der Ansprüche 12 oder 14,
**dadurch gekennzeichnet,**
**dass** das Betätigungselement (50) einen Sensor aufweist und der Sensor wenigstens zwei ersten Lichtquellen (S1, S2), die Licht zeitsequenziell getaktet, phasenweise aussenden, und wenigstens einem Empfänger (E) zum Empfang zumindest des von den ersten Lichtquellen (S1, S2) stammenden, taktsynchronen Wechsellichtanteils, aufweist, wobei insbesondere der Sensor eine durch wenigstens eine Lichtquelle (S1, S2) eingestrahlte Lichtintensität so regelt, dass ein taktsynchrone Wechsellichtanteil, der zwischen verschiedenen Phasen auftritt, am Empfänger (E) zu Null wird und zur Regelung der eingestrahlten Lichtintensität ein Empfangssignal am Empfänger (E) bezüglich der Phasenlage bestimmt wird und damit eine Stellgrösse erzeugt wird.

16. Verfahren nach einem der Ansprüche 12 bis 15,
**dadurch gekennzeichnet,**
**dass** das Verfahren zur Erkennung einer Bewegung mit einem mobilen Identifikationsgeber (10) nach einem der vorhergehenden Ansprüche die Schritte umfasst:
- Aussenden einer Strahlung im Wellenlängenbereich des Lichts,
- Durchstrahlen des Lichts durch einen Lichtleiter (13) bis zum Objekt (100),
- Rückstrahlen zumindest eines Teils des Lichts vom Objekt (100) und Rückkoppeln des rückgestrahlten Lichts in den Lichtleiter (13),
- Empfangen des rückgestrahlten Lichts unter Bildung eines Eingangssignals,
- Auswerten des Eingangesignals zur Bestimmung der Bewegung und/oder Position des Objekts (10),
- das diffus rückgestreute Licht über Lichtkopplungsmittel (13a) des Lichtleiters (13) selbst In den Lichtleiter eingekoppelt wird, wobei insbesondere die Lichtkoppiungsmittei (13a) das vom Objekt (100) rückgestreute Licht quer zur Längserstreckung des Lichtleiters (13) In den Lichtleiter einkoppeln.

17. Verfahren nach Anspruch 16,
**dadurch gekennzeichnet,**
**dass** die vom Sendeelement (11) durch den Lichtleiter (13) gestrahlte Strahlung ausgehend von der dem Objekt (100) gegenüberliegenden Seite (13b) quer durch den Lichtleiter (13) gestrahlt wird, bevor sie vom Objekt (100) rückgestreut wird und/oder dass die vom Sendeelement (11) entlang des Lichtleiters (13) gestrahlte Strahlung von den Lichtkopplungsmitteln (13a) zumindest teilweise aus dem Lichtleiter (13) ausgekoppelt wird, bevor sie vom Objekt (100) gestreut wird und/oder dass die Betätigungszone durch das Betätigungselement optisch überwacht wird, und durch eine Erfassung eines vorgegebenen Bewegungsmusters durch die Bewegung des Objektes das Signal ausgelöst wird.

18. Mobiler Identifikatlonsgeber (10) nach einem der Ansprüche 1 bis 11, welcher nach einem der Verfahren gemäß einem der Ansprüche 12 bis 17 betreibbar ist.

## Claims

1. A mobile identification generator (10) for a security system of a motor vehicle,
with a housing, inside which an electronic unit for data communication with a part on the vehicle, in particular of the security system, is arranged,
wherein at least one actuating element is provided for triggering a signal in the mobile identification generator (10),
wherein the actuating element optically monitors an actuating zone (60) in the region of the housing, and
the signal is triggered by a movement of an object (100) inside the actuating zone (60),
**characterized in that**
a keyless activation of a locking and unlocking procedure of a closure apparatus is capable of being triggered by means of the actuating element (50), wherein the keyless activation is capable of being triggered without contact inside the actuating zone (60).

2. A mobile identification generator (10) according to Claim 1, **characterized in that** the actuating element (50) acts as a sensing device, a slide control, a proximity detector, a movement detector and/or a detector detecting 3-dimensional movements.

3. A mobile identification generator (10) according to one of the preceding Claims, **characterized in that** the actuating zone (60) is an optically monitored 3-dimensional zone and/or the object (100) is a human hand, a human finger or a mechanical component, in particular that the actuating element (50) has a sensor, in a particularly preferred manner that the sensor is designed in an opto-electronic manner, and in particular that the sensor has at least one light transmitter and at least one light receiver, wherein a direction of a movement of the object (100) in the actuating zone (60) is capable of being determined by means of the sensor, wherein in particular the light transmitter is a light-emitting diode (LED), an organic light-emitting diode (OLED) or a laser diode, and in particular that the light transmitter emits an infrared light.

4. A mobile identification generator (10) according to any one of the preceding Claims, **characterized in that** the actuating element (50) is arranged in the housing, wherein in particular a covering element (70) covers the actuating element (50), and in a particularly preferred manner the covering element (70) is integrally joined to the housing, and wherein in particular the covering element (70) is permeable by light, in particular that the covering element (70) is permeable by the wavelength emitted by the light transmitter, and in a particularly preferred manner that the actuating zone (60) is situated above an outer side of the covering element facing the object (100).

5. A mobile identification generator (10) according to any one of the preceding Claims, **characterized in that** the covering element (70) is impermeable by light and the actuating element (50) monitors an underside of the covering element facing away from the object (100), and/or the actuating zone (60) is arranged above an outer face of the housing facing the object (100), wherein in particular the outer side of the covering element has a surface texture and/or in particular that the actuating zone (60) has a drop-like form.

6. A mobile identification generator (10) according to any one of the preceding Claims, **characterized in that** the mobile identification generator (10) has a display, wherein status information on the motor vehicle is capable of being indicated by the display, wherein in particular the display (50) [*sic*] uses at least one of the following means: a light-emitting diode (LED), an organic light-emitting diode (OLED), a liquid crystal display (LCD), a plasma screen, a cathode ray tube, a surface-conduction electron-emitter display (SED) or a field emission screen (FED - field emission display).

7. A mobile identification generator (10) according to any one of the preceding Claims, **characterized in that** the actuating element (50) is used for the control of the display without contact and/or the actuating element (50) is used for the input of information without contact, in particular that the information is capable of being indicated on the display, and/or in particular that the actuating element (50) is used for the control of an input indicator (cursor) of the display without contact.

8. A mobile identification generator (10) according to one of Claims 6 and 7, **characterized in that** the actuating zone (60) covers the display and/or the sensor contains at least one opto-electronic measuring apparatus with at least five light transmitters and at least one light receiver.

9. A mobile identification generator (10) according to any one of the preceding Claims, **characterized in that** the sensor contains at least one opto-electronic measuring apparatus with at least two light transmitters and at least one light receiver, wherein the light transmitters have associated with them detection beams which define a distant zone situated inside the actuating zone (60) and a closer zone, and the actuating element (50) additionally has an evaluating unit, wherein the evaluating unit initiates a triggering of the signal starting from a movement of the object (100) from a position in the distant zone in a pre-determined direction into the closer zone.

10. A mobile identification generator (10) according to any one of the preceding Claims, **characterized in that** the actuating element (50) has at least one transmission element (11) for radiation in the range of the wavelength of the light and at least one receiving element (12) for receiving at least part of the radiation emitted by the transmission element (11) and reflected by the object (100) and with a light conductor (13) arranged in the beam path between the transmission element (11) and the receiving element (12), wherein the light conductor (13) itself has light-coupling means for coupling for the radiation diffusely scattered on the object (10) [*sic*] and transmitted previously through the light conductor (13), wherein in particular the light-coupling means (13a) couple the light scattered by the object (100) transversely to the longitudinal extension of the light conductor (13) into the light conductor (13).

11. A mobile identification generator (10) according to any one of the preceding Claims, **characterized in that** the actuating element (50) has an arrangement for measuring or recognizing a change on or as a result of a retro-reflecting element, wherein the arrangement for measuring or recognizing a change on or as a result of a retro-reflecting element, which is separate from the arrangement through a medium permeable by a specified radiation, with
- a sensor-active region in the medium with at least two measurement paths with associated radiation sources for irradiating the specified radiation into the medium permeable by radiation and with at least one radiation receiver, wherein the radiation receiver is arranged in the overlapping region of the zones of a maximum of the radiation intensity pattern in the case of the retro-radiation - discharged from the side of the medium opposite the retro-reflecting element when the sensor-active region is in the state of rest - of the radiation sources associated with the radiation receiver in order to produce a detection signal corresponding to the radiation received,
- a switch arrangement for switching on for periods of time each of the individual measurement paths in a successive repeating switching sequence of a specified switching sequence frequency,
- a setting arrangement for setting a radiation output of the radiation source associated with the respective measurement path, the radiation output being dimensioned in such a way that when the sensor-active region is in the state of rest each measurement path produces a portion of the detection signal, the average amplitude value of which is equal to the average amplitude value of the portions of the detection signal associated with the at least one other measurement path,
- a filter circuit arranged downstream of the radiation receiver for transmitting the detection signal modulated to an oscillation of the switching sequence frequency to an evaluating arrangement for producing a control signal and/or measurement value signal from the difference - measured or established in the evaluating arrangement
- in the portions of the detection signal associated with the individual measurement paths, wherein in particular the at least two measurement paths are formed by at least one light emitter and a plurality of light receivers.

12. A method of triggering a signal without contact in a mobile identification generator (10) for a security system of a motor vehicle by a movement of an object (100),
wherein
the mobile identification generator (10) has a housing,
an electronic unit for data communication with a part on the vehicle, in particular with a security system, is arranged inside the housing, and
at least one actuating element (50) is provided to trigger a signal in the mobile identification generator (10),
wherein the actuating element (50) monitors an actuating zone (60) in the region of the housing, and wherein
the signal is triggered by a movement of an object (100) inside the actuating zone (60),
**characterized in that**
a keyless activation of a locking and unlocking procedure of a closure apparatus is triggered by means of the actuating element (50), and the keyless activation is triggered without contact inside the actuating zone (60).

13. A method according to Claim 12, **characterized in that** in order to activate the locking procedure a user touches inside the actuating zone (60).

14. A method according to Claim 13, **characterized in that** in order to activate the unlocking procedure a user passes his or her hand over the actuating zone (60) and/or a locking and unlocking procedure of the closure apparatus is indicated on a display.

15. A method according to one of Claims 12 or 14, **characterized in that** the actuating element (50) has a sensor and the sensor has at least two first light sources **(S1, S2),** which emit light in a time-sequentially clock-timed, phased manner, and at least one receiver **(E)** for receiving at least the clock-synchronous alternating light component originating from the first light sources **(S1, S2),** wherein in particular the sensor regulates a light intensity irradiated by at least one light source **(S1, S2)** in such a way that a clock-synchronous alternating light component, which occurs between different phases, becomes zero at the receiver **(E),** and in order to regulate the irradiated light intensity an incoming signal at the receiver **(E)** is determined with respect to the phase position and thus a regulating variable is produced.

16. A method according to any one of Claims 12 to 15, **characterized in that** the method of detecting a movement with a mobile identification generator (10) according to any one of the preceding Claims comprises the steps:
- emission of radiation in the range of the wavelength of the light,
- transmission of the light through a light conductor (13) as far as the object (100),
- retro-reflection of at least part of the light from the object (100) and feeding back the retro-reflected light into the light conductor (13),
- reception of the retro-reflected light whilst forming an input signal,
- evaluation of the input signal in order to determine the movement and/or position of the object (100),
- the diffusely backscattered light is coupled by way of light-coupling means (13a) of the light conductor (13) itself into the light conductor, wherein in particular the light-coupling means (13a) couple the light backscattered by the object (100) transversely to the longitudinal extension of the light conductor (13) into the light conductor.

17. A method according to Claim 16, **characterized in that** the radiation emitted by the transmission element (11) through the light conductor (13) is emitted starting from the side (13b) opposite the object (100) transversely through the light conductor (13) before it is backscattered by the object (100), and/or the radiation emitted by the transmission element (11) along the light conductor (13) is decoupled by the light-coupling means (13a) at least in part out of the light conductor (13) before it is backscattered by the object (100), and/or the actuating zone is monitored optically by the actuating element, and the signal is triggered by the detection of a pre-set movement pattern by the movement of the object.

18. A mobile identification generator (10) according to any one of Claims 1 to 11, which is capable of being operated in accordance with any one of the methods according to any one of Claims 12 to 17.

## Revendications

1. Emetteur d'identification mobile (10) pour un système de sécurité d'un véhicule automobile,
comportant un boîtier à l'intérieur duquel est disposée une unité électronique pour la communication de données avec une partie côté véhicule, en particulier du système de sécurité,
au moins un élément d'actionnement pour déclencher un signal étant prévu dans l'émetteur d'identification mobile (10),
l'élément d'actionnement surveillant optiquement une zone d'actionnement (60) dans la région du boîtier, et
le signal étant déclenché par un mouvement d'un objet (100) à l'intérieur de la zone d'actionnement (60),
**caractérisé en ce**
**qu'**une activation sans clé d'une opération de verrouillage et de déverrouillage d'un dispositif de fermeture peut être déclenchée au moyen de l'élément d'actionnement (50), l'activation sans clé pouvant être déclenchée sans contact à l'intérieur de la zone d'actionnement (60).

2. Emetteur d'identification mobile (10) selon la revendication 1,
**caractérisé en ce**
**que** l'élément d'actionnement (50) fait fonction de poussoir, de curseur de réglage, de détecteur de proximité, de détecteur de mouvement et/ou de détecteur de mouvements tridimensionnels.

3. Emetteur d'identification mobile (10) selon une des revendications précédentes,
**caractérisé en ce**
**que** la zone d'actionnement (60) est une zone tridimensionnelle surveillée optiquement et/ou l'objet (100) est une main humaine, un doigt humain ou un composant mécanique, en particulier que l'élément d'actionnement (50) présente un capteur, que le capteur est de manière particulièrement préférée de type optoélectronique, que le capteur présente en particulier au moins un émetteur de lumière et au moins un récepteur de lumière, une direction d'un mouvement de l'objet (100) dans la zone d'actionnement (60) pouvant être déterminée au moyen du capteur, l'émetteur de lumière étant en particulier une diode électroluminescente (LED), une diode électroluminescente organique (OLED) ou une diode laser, que l'émetteur de lumière émet en particulier une lumière infrarouge.

4. Emetteur d'identification mobile (10) selon une des revendications précédentes,
**caractérisé en ce**
**que** l'élément d'actionnement (50) est disposé dans le boîtier, un élément de recouvrement (70) recouvrant en particulier l'élément d'actionnement (50), que l'élément de recouvrement (70) est de manière particulièrement préférée assemblé avec le boîtier par liaison de matière et l'élément de recouvrement (70) étant en particulier translucide, que l'élément de recouvrement (70) est en particulier translucide pour la longueur d'onde émise par l'émetteur de lumière, que la zone d'actionnement (60) est de manière particulièrement préférée disposée au-dessus d'une face extérieure de l'élément de recouvrement tournée vers l'objet (100).

5. Emetteur d'identification mobile (10) selon une des revendications précédentes,
**caractérisé en ce**
**que** l'élément de recouvrement (70) est opaque et l'élément d'actionnement (50) surveille une face inférieure de l'élément de recouvrement opposée à l'objet (100) et/ou que la zone d'actionnement (60) est disposée au-dessus d'une surface extérieure du boîtier tournée vers l'objet (100), la face extérieure de l'élément de recouvrement présentant en particulier une structure de surface et/ou que la zone d'actionnement (60) présente en particulier une forme de goutte.

6. Emetteur d'identification mobile (10) selon une des revendications précédentes,
**caractérisé en ce**
**que** l'émetteur d'identification mobile (10) présente un écran, des informations d'état côté véhicule pouvant être représentées par l'écran, l'écran (50) utilisant au moins un des moyens suivants : une diode électroluminescente (LED), une diode électroluminescente organique (OLED), un afficheur à cristaux liquides (LCD), un écran plasma, un tube cathodique, un écran à technologie SED (Surface-Conduction Electron Emitter) ou un écran à émission de champ (FED).

7. Emetteur d'identification mobile (10) selon une des revendications précédentes,
**caractérisé en ce**
**que** l'élément d'actionnement (50) sert à la commande sans contact de l'écran et/ou que l'élément d'actionnement (50) sert à l'entrée sans contact d'une information, que l'information peut en particulier être affichée sur l'écran, et/ou que l'élément d'actionnement (50) sert en particulier à la commande sans contact d'un indicateur d'entrée (curseur) de l'écran.

8. Emetteur d'identification mobile (10) selon une des revendications 6 et 7,
**caractérisé en ce**
**que** la zone d'actionnement (60) recouvre l'écran et/ou que le capteur contient au moins un dispositif de mesure optoélectronique avec au moins cinq émetteurs de lumière et au moins un récepteur de lumière.

9. Emetteur d'identification mobile (10) selon une des revendications précédentes,
**caractérisé en ce**
**que** le capteur contient au moins un dispositif de mesure optoélectronique avec au moins deux émetteurs de lumière et au moins un récepteur de lumière, des lobes de détection étant associés aux émetteurs de lumière, qui définissent une zone éloignée située à l'intérieur de la zone d'actionnement (60) et une zone plus proche, et que l'élément d'actionnement (50) présente de plus une unité d'évaluation, l'unité d'évaluation provoquant un déclenchement du signal à partir d'un mouvement de l'objet (100) dans une direction prédéterminée d'une position dans la zone éloignée vers la zone plus proche.

10. Emetteur d'identification mobile (10) selon une des revendications précédentes,
**caractérisé en ce**
**que** l'élément d'actionnement (50) présente au moins un élément émetteur (11) pour un rayonnement dans la plage de longueurs d'onde de la lumière et au moins un élément récepteur (12) pour la réception d'au moins une partie du rayonnement émis par l'élément émetteur (11) et réfléchi par l'objet (100) ainsi qu'un guide de lumière (13) disposé dans le chemin optique entre élément émetteur (11) et élément récepteur (12), le guide de lumière (13) présentant lui-même des moyens de couplage de lumière pour l'injection du rayonnement dispersé de manière diffuse sur l'objet (100), préalablement rayonné à travers le guide de lumière (13), les moyens de couplage de lumière (13a) injectant en particulier dans le guide de lumière (13) la lumière dispersée par l'objet (100) transversalement à l'extension longitudinale du guide de lumière (13).

11. Emetteur d'identification mobile (10) selon une des revendications précédentes,
**caractérisé en ce**
**que** l'élément d'actionnement (50) présente un dispositif pour mesurer ou détecter une modification sur un élément réfléchissant ou par suite d'un élément réfléchissant, le dispositif pour mesurer ou détecter une modification sur un élément réfléchissant ou par suite d'un élément réfléchissant qui est séparé du dispositif par un milieu perméable à un rayonnement défini, présentant
- une zone de détection active dans le milieu avec au moins deux sections de mesure avec des sources de rayonnement associées pour rayonner le rayonnement défini dans le milieu perméable au rayonnement et avec au moins un récepteur de rayonnement, le récepteur de rayonnement étant disposé dans la zone de recouvrement des zones d'un maximum de la courbe d'intensité de rayonnement pour le rayonnement réfléchi des sources de rayonnement associées au récepteur de rayonnement sortant par le côté du milieu opposé à l'élément réfléchissant quand la zone de détection active se trouve dans l'état de repos, pour générer un signal de détection correspondant au rayonnement reçu,
- un dispositif de commutation pour une activation périodique de chacune des sections de mesure dans une séquence de commutation successive, répétitive, à une fréquence de séquence de commutation définie,
- un dispositif de réglage pour régler une puissance de rayonnement de la source de rayonnement associée à la section de mesure respective de façon que quand la zone de détection active se trouve dans l'état de repos, chaque section de mesure génère une portion du signal de détection, dont la valeur d'amplitude moyenne est égale à la valeur d'amplitude moyenne des portions du signal de détection associées à ladite au moins une autre section de mesure,
- un circuit de filtrage placé en aval du récepteur de rayonnement pour transmettre le signal de détection modulé à une oscillation de la fréquence de séquence de commutation à un dispositif d'évaluation pour générer un signal de commande et/ou de valeur mesurée à partir de la différence mesurée ou constatée dans le dispositif d'évaluation des portions du signal de détection associées aux différentes sections de mesure, lesdites au moins deux sections de mesure étant en particulier formées par au moins un émetteur de lumière et plusieurs récepteurs de lumière.

12. Procédé pour le déclenchement sans contact d'un signal dans un émetteur d'identification mobile (10) pour un système de sécurité d'un véhicule automobile par un mouvement d'un objet (100), dans lequel
l'émetteur d'identification mobile (10) présente un boîtier,
une unité électronique pour la communication de données avec une partie côté véhicule, en particulier un système de sécurité, est disposée à l'intérieur du boîtier, et
au moins un élément d'actionnement (50) pour déclencher un signal est prévu dans l'émetteur d'identification mobile (10),
l'élément d'actionnement (50) surveillant une zone d'actionnement (60) dans la région du boîtier, et
le signal étant déclenché par un mouvement d'un objet (100) à l'intérieur de la zone d'actionnement (60),
**caractérisé en ce**
**qu'**une activation sans clé d'une opération de verrouillage et de déverrouillage d'un dispositif de fermeture est déclenchée au moyen de l'élément d'actionnement (50) et que l'activation sans clé est déclenchée sans contact à l'intérieur de la zone d'actionnement (60).

13. Procédé selon la revendication 12,
**caractérisé en ce**
**que** pour activer l'opération de verrouillage, un utilisateur touche la zone d'actionnement (60).

14. Procédé selon la revendication 13.
**caractérisé en ce**
**que** pour activer l'opération de déverrouillage, un utilisateur passe la main sur la zone d'actionnement (60) et/ou qu'une opération de verrouillage ou de déverrouillage du dispositif de fermeture est affichée sur un écran.

15. Procédé selon une des revendications 12 ou 14,
**caractérisé en ce**
**que** l'élément d'actionnement (50) présente un capteur et le capteur présente au moins deux premières sources de lumière (S1, S2) qui émettent de la lumière de manière cyclique séquentiellement dans le temps, en phases, et au moins un récepteur (E) pour recevoir au moins la part de lumière modulée synchrone provenant des premières sources de lumière (S1, S2), le capteur réglant en particulier une intensité lumineuse rayonnée par au moins une source de lumière (S1, S2) de façon qu'une part de lumière modulée synchrone qui apparaît entre différentes phases devienne nulle sur le récepteur (E) et que pour réguler l'intensité lumineuse rayonnée, un signal de réception soit déterminé au récepteur (E) en fonction de la relation de phase et qu'une grandeur réglante soit générée par ce moyen.

16. Procédé selon une des revendications 12 à 15,
**caractérisé en ce**
**que** le procédé pour détecter un mouvement avec un émetteur d'identification mobile (10) selon une des revendications précédentes comprend les étapes suivantes :
- émission d'un rayonnement dans la plage de longueurs d'onde de la lumière,
- rayonnement de la lumière à travers un guide de lumière (13) jusqu'à l'objet (100),
- réflexion d'au moins une partie de la lumière par l'objet (100) et réinjection de la lumière réfléchie dans le guide de lumière (13),
- réception de la lumière réfléchie avec formation d'un signal d'entrée,
- évaluation du signal d'entrée pour déterminer le mouvement et/ou la position de l'objet (100),
- la lumière rétrodiffusée est injectée dans le guide de lumière par des moyens de couplage de lumière (13a) du guide de lumière (13) lui-nême, les moyens de couplage de lumière (13a) injectant en particulier la lumière rétrodiffusée par l'objet (100) dans le guide de lumière transversalement à l'extension longitudinale du guide de lumière (13).

17. Procédé selon la revendication 16,
**caractérisé en ce**
**que** le rayonnement rayonné par l'élément émetteur (11) à travers le guide de lumière (13) est rayonné transversalement à travers le guide de lumière (13) à partir du côté (13b) opposé à l'objet (100) avant d'être rétrodiffusé par l'objet (100) et/ou que le rayonnement rayonné par l'élément émetteur (11) le long du guide de lumière (13) est extrait au moins partiellement du guide de lumière (13) par les moyens de couplage de lumière (13a) avant d'être dispersé par l'objet (100) et/ou que la zone d'actionnement est surveillée optiquement par l'élément d'actionnement et le signal est déclenché par la détection d'une combinaison de mouvements prédéfinie résultant du mouvement de l'objet.

18. Emetteur d'identification mobile (10) selon une des revendications 1 à 11, lequel peut être utilisé selon un des procédés selon une des revendications 12 à 17.
